(19) 

(11) **EP 4 435 890 B1**

(12) **EUROPEAN PATENT SPECIFICATION**

(45) Date of publication and mention of the grant of the patent:
**26.08.2026 Bulletin 2026/35**

(21) Application number: **22911519.1**

(22) Date of filing: **21.09.2022**

(51) International Patent Classification (IPC):
***H01M 4/62*** *(2006.01)* ***H01M 10/052*** *(2010.01)*
***H01M 4/02*** *(2006.01)* ***H01M 4/134*** *(2010.01)*
***H01M 4/1395*** *(2010.01)* ***H01M 4/38*** *(2006.01)*

(52) Cooperative Patent Classification (CPC):
**H01M 4/622; H01M 4/134; H01M 4/1395; H01M 4/386; H01M 10/052;** H01M 2004/027; Y02E 60/10

(86) International application number:
**PCT/KR2022/014122**

(87) International publication number:
**WO 2023/120880 (29.06.2023 Gazette 2023/26)**

(54) **NEGATIVE ELECTRODE AND SECONDARY BATTERY INCLUDING THE NEGATIVE ELECTRODE**

NEGATIVE ELEKTRODE UND SEKUNDÄRBATTERIE MIT DIESER NEGATIVEN ELEKTRODE

ÉLECTRODE NÉGATIVE ET BATTERIE SECONDAIRE COMPRENANT L'ÉLECTRODE NÉGATIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.12.2021 KR 20210187721**

(43) Date of publication of application:
**25.09.2024 Bulletin 2024/39**

(73) Proprietor: **LG Energy Solution, Ltd.**
**Seoul 07335 (KR)**

(72) Inventors:
- **YOON, Ji Hee**
  **Daejeon 34122 (KR)**
- **KIM, Woo Ha**
  **Daejeon 34122 (KR)**
- **YOON, Sung Soo**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:
**JP-A- 2019 087 313**
**KR-A- 20180 010 789**
**KR-A- 20180 071 942**
**KR-A- 20210 097 648**
**KR-B1- 101 686 475**
**US-A1- 2016 260 973**
**US-A1- 2021 083 275**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 435 890 B1

## Description

## TECHNICAL FIELD

Cross-reference to Related Applications

This application claims priority from Korean Patent Application No. 10-2021-0187721, filed on December 24, 2021.

Technical Field

The present invention relates to a negative electrode including a negative electrode active material layer, wherein the negative electrode active material layer includes a negative electrode active material and a binder, wherein the binder includes a) an acryl-based polymer which is a polymer of a monomer mixture containing a (meth)acrylamide group-containing monomer, an unsaturated carboxylic acid-based monomer, and a monomer having a solubility in water of 100 g/L or less; and b) cellulose nanofibers, and a secondary battery including the negative electrode.

## BACKGROUND ART

Requirements for the use of alternative energy or clean energy have increased due to the rapid increase in the use of fossil fuels, and, as a part of this trend, power generation and electricity storage using an electrochemical reaction are the most actively researched areas.

Currently, a typical example of an electrochemical device using the electrochemical energy may be a secondary battery and there is a trend that its usage area is expanding more and more. In recent years, demand for secondary batteries as an energy source has been significantly increased as technology development and demand with respect to portable devices, such as portable computers, mobile phones, and cameras, have increased, and, among these secondary batteries, lithium secondary batteries having high energy density, i.e., high capacity, have been subjected to considerable research and have been commercialized and widely used.

In general, a secondary battery is composed of a positive electrode, a negative electrode, an electrolyte, and a separator. The negative electrode includes a negative electrode active material in which lithium ions released from the positive electrode are intercalated and deintercalated, and silicon-based particles having large discharge capacity may be used as the negative electrode active material.

However, the silicon-based particle has low initial efficiency, and its volume changes excessively during charge and discharge. Accordingly, during battery operation, since the silicon-based particles are exfoliated from the negative electrode or a conductive path in the negative electrode is reduced, there is a problem in that lifetime of the battery is reduced. Particularly, when silicon particles (particles formed of silicon), so-called Pure Silicon, are used, the above-described problem is more severe.

In order to suppress the exfoliation of the silicon-based particles and maintain the conductive path even with the large volume change of the silicon-based particle, there is an attempt to improve the binder. For example, a technique of using an acryl-based binder, instead of using carboxymethyl cellulose in combination with a styrene butadiene rubber, has been attempted.

In order to improve the lifetime of the battery by suppressing the exfoliation of the silicon-based particles and maintaining the conductive path while using the acryl-based binder, the acryl-based binder has typically been adjusted to have a high modulus. For example, a weight-average molecular weight of the acryl-based binder must be as high as 400,000 or more, and a $T_g$ value must be as high as 180°C or higher. However, since dispersion of a negative electrode slurry is difficult when the weight-average molecular weight of the acryl-based binder is high, conductivity in the negative electrode is reduced. Also, since brittleness of a negative electrode active material layer is excessively increased when the $T_g$ value of the acryl-based binder is excessively high, negative electrode adhesion is reduced. For this reason, it is necessary to deviate from the conventional method of controlling the weight-average molecular weight or $T_g$ value of the acryl-based binder. US2016/260973 A1 discloses a slurry composition for a negative electrode of a lithium ion secondary battery, the slurry composition including 100 parts by weight of an active material containing 8% by weight or higher of a non-carbon negative electrode active material, 0.5 to 10 parts by weight of a water-soluble polymer containing a carboxy group, 0.01 to 0.5 parts by weight of a particulate polymer, and water; a negative electrode for a lithium ion secondary battery including a negative electrode material layer obtained therefrom; and a lithium ion secondary battery having the same. KR20210097648 A relates to a binder composition for a negative electrode comprising: a polymer which is a polymer of a first monomer mixture comprising a (meth) acrylamide group containing monomer, an unsaturated carbonic acid-based monomer, and a monomer having 100 g/L or less of solubility with respect to water; and a particulate polymer. KR20180010789 A relates to a binder having initial capacity, lifespan properties and electrode stability, an electrode and a

lithium battery comprising the binder, and a method for preparing the binder. The binder comprises a third polymer which is a cross-linking product of one or more first polymers having a first functional group and selected from polyamic acid and polyimide, and a second water-soluble polymer having a second functional group. The first functional group reacts with the second functional group to form an ester group, so the first polymer and the second polymer are cross-linked.

Thus, there is a need for a new technique capable of improving life characteristics of the battery.

## DISCLOSURE OF THE INVENTION

### TECHNICAL PROBLEM

An aspect of the present invention provides a negative electrode with improved life characteristics of a battery.

Another aspect of the present invention provides a secondary battery including the negative electrode.

### TECHNICAL SOLUTION

According to an aspect of the present invention, there is provided a negative electrode including a negative electrode active material layer, wherein the negative electrode active material layer includes a negative electrode active material and a binder, wherein the binder includes a) an acryl-based polymer which is a polymer of a monomer mixture containing a (meth)acrylamide group-containing monomer, an unsaturated carboxylic acid-based monomer, and a monomer having a solubility in water of 100 g/L or less; and b) cellulose nanofibers, wherein the cellulose nanofibers have an average length of 1 μm to 5 μm, and wherein the cellulose nanofibers have an average aspect ratio of 30 to 2,000.

According to another aspect of the present invention, there is provided a secondary battery including the negative electrode.

### ADVANTAGEOUS EFFECTS

According to the present invention, an acryl-based polymer may be evenly dispersed in a negative electrode slurry, and cellulose nanofibers may act as a filler in a negative electrode active material layer. Accordingly, durability of a negative electrode may be improved.

Also, since a carboxy group on a surface of the cellulose nanofiber is bonded to a hydroxyl group of the acryl-based polymer, tensile strength of the binder may be high. Accordingly, a structure of the negative electrode may be maintained even with a rapid volume change of a negative electrode active material, particularly, silicon particles, exfoliation of the negative electrode active material may be suppressed, and a conductive path may be effectively maintained in the negative electrode active material layer. Thus, life characteristics of a battery may be improved.

Furthermore, since the cellulose nanofiber is longer than conventionally used carboxymethyl cellulose to be able to be easily adsorbed to the negative electrode active material and may be surface-adhered to surrounding components, unlike a styrene butadiene rubber, adhesion of the negative electrode may be further improved and lifetime of the battery may be further improved by preventing the exfoliation of the negative electrode active material during battery operation.

## BRIEF DESCRIPTION OF THE DRAWINGS

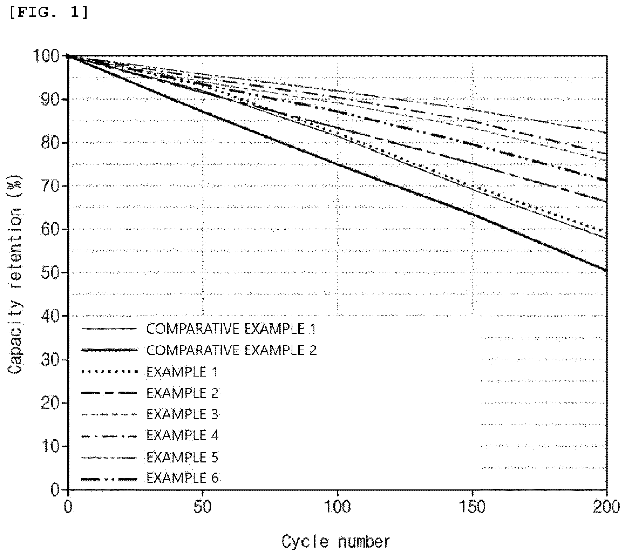

FIG. 1 is a graph illustrating capacity retention of each of secondary batteries using negative electrodes of Examples 1 to 5 and Reference Example 6, and Comparative Examples 1 and 2 at room temperature.

## MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary.

It will be further understood that the terms "include," "comprise," or "have" when used in this specification, specify the presence of stated features, numbers, steps, elements, or combinations thereof, but do not preclude the presence or

addition of one or more other features, numbers, steps, elements, or combinations thereof.

$D_{50}$ in the present specification may be defined as a particle diameter at a cumulative volume of 50% in a particle size distribution curve. The $D_{50}$, for example, may be measured by using a laser diffraction method. The laser diffraction method may generally measure a particle diameter ranging from a submicron level to a few mm and may obtain highly repeatable and high-resolution results.

The expression "weight-average molecular weight (Mw)" in the present specification denotes a standard polystyrene-equivalent value measured by gel permeation chromatography (GPC). Specifically, the weight-average molecular weight is a value obtained by converting a value measured using GPC under the following conditions, and standard polystyrene of Agilent system was used to prepare a calibration curve.

<Measurement conditions>

Measuring instrument: Ultrahydrogel Linear × 2
Solvent: 0.1 M $NaNO_3$, pH 7 Phosphate buffer (0.45 μm filtered)
Flow rate: 1.0 mℓ/min
Sample concentration: 1.0 mg/mℓ
Injection amount: 100 μℓ
Column temperature: 40°C
Detector: Waters RI detector
Standard: Polyacrylic acid (corrected by cubic function)
Data processing: Empower 3

In the present specification, the expression "specific surface area" is measured by a Brunauer-Emmett-Teller (BET) method, wherein, specifically, the specific surface area may be calculated from a nitrogen gas adsorption amount at a liquid nitrogen temperature (77K) using BELSORP-mino II by Bel Japan Inc.

In the present specification, a modulus may be measured by the following method.

After a polymer solution was dried at room temperature to be prepared in the form of a film, the modulus was confirmed by a method in which the film was punched out to a sample size of 10 mm × 20 mm and strain-stress was measured at a strain rate of 5 mm/min through a Text Analyzer.

## Negative Electrode

A negative electrode according to an embodiment of the present invention includes a negative electrode active material layer, wherein the negative electrode active material layer includes a negative electrode active material and a binder, wherein the binder may include a) an acryl-based polymer which is a polymer of a monomer mixture containing a (meth)acrylamide group-containing monomer, an unsaturated carboxylic acid-based monomer, and a monomer having a solubility in water of 100 g/L or less; and b) cellulose nanofibers, wherein the cellulose nanofibers have an average length of 1 μm to 5 μm, and wherein the cellulose nanofibers have an average aspect ratio of 30 to 2,000.

The negative electrode may include a negative electrode active material layer. The negative electrode active material layer may be disposed on a negative electrode current collector.

The negative electrode current collector is not particularly limited so long as it has conductivity without causing adverse chemical changes in the battery. For example, copper, stainless steel, aluminum, nickel, titanium, fired carbon, aluminum or stainless steel that is surface-treated with one of carbon, nickel, titanium, silver, or the like may be used as the current collector. Specifically, a transition metal that absorbs carbon well, such as copper and nickel, may be used as the negative electrode current collector. The negative electrode current collector may have a thickness of 6 μm to 20 μm, but the thickness of the negative electrode current collector is not limited thereto.

The negative electrode active material layer may be disposed on one surface or both surfaces of the current collector.

The negative electrode active material layerincludes a negative electrode active material and a binder.

### 1. Negative Electrode Active Material

The negative electrode active material may include a silicon-based active material. The silicon-based active material allows the negative electrode to have high capacity.

Particularly, the negative electrode active material may include silicon particles. The silicon particles may be silicon particles (particles formed of silicon), so-called Pure Silicon. The silicon particles may effectively improve the

capacity of the negative electrode. Since a volume of the silicon particle is rapidly changed during charge and discharge of the battery, life characteristics of the negative electrode may be degraded. However, in the present invention, since the binder may suppress exfoliation of the silicon particles even with the rapid volume change of the silicon particles and may maintain a conductive path in the negative electrode active material layer by including cellulose nanofibers and an acryl-based polymer containing an acrylamide-derived unit, the life characteristics of the negative electrode may be improved.

An average particle diameter ($D_{50}$) of the silicon particles may be in a range of 1 μm to 10 μm, specifically, 3 μm to 5 μm.

The silicon particles may be included in an amount of 75 wt% to 85 wt% in the negative electrode active material layer. When the above range is satisfied, the capacity of the negative electrode may be effectively improved.

## 2. Binder

The binder includes a) an acryl-based polymer which is a polymer of a monomer mixture containing a (meth) acrylamide group-containing monomer, an unsaturated carboxylic acid-based monomer, and a monomer having a solubility in water of 100 g/L or less; and b) cellulose nanofibers, wherein the cellulose nanofibers have an average length of 1 μm to 5 μm, and wherein the cellulose nanofibers have an average aspect ratio of 30 to 2,000.

### (1) Acryl-based Polymer

The acryl-based polymer may act as a binder and a thickener in the negative electrode active material layer.

The acryl-based polymer is a polymer of a monomer mixture containing (a1) a (meth)acrylamide group-containing monomer, (a2) an unsaturated carboxylic acid-based monomer, and (a3) a monomer having a solubility in water of 100 g/L or less.

As the (meth)acrylamide group-containing monomer, for example, at least one monomer selected from the group consisting of acrylamide, N-methylolacrylamide, N-butoxymethylacrylamide, N-methylolmethacrylamide, N-butoxymethylmethacrylamide, N,N-diethylacrylamide, N,N-dimethylacrylamide, N,N-diethylmethacrylamide, N-ethylacrylamide, N-propylacrylamide, and N-tert-butylacrylamide may be used alone or in a mixture thereof, but the present invention is not limited thereto. Specifically, the (meth)acrylamide group-containing monomer may be acrylamide.

The (meth)acrylamide group-containing monomer may be included in an amount of 60 parts by weight to 90 parts by weight, specifically, 70 parts by weight to 85 parts by weight based on 100 parts by weight of the monomer mixture. When the amount of the (meth)acrylamide group-containing monomer satisfies the above range, since negative electrode adhesion is improved, the exfoliation of the negative electrode active material may be suppressed and durability of the negative electrode may be improved.

As the unsaturated carboxylic acid-based monomer, for example, at least one selected from the group consisting of acrylic acid, methacrylic acid, crotonic acid, isocrotonic acid, maleic anhydride, fumaric acid, and itaconic acid may be used alone or in a mixture thereof, but the present invention is not limited thereto. Specifically, the unsaturated carboxylic acid-based monomer may be acrylic acid.

The unsaturated carboxylic acid-based monomer may be included in an amount of 8 parts by weight to 30 parts by weight, specifically, 10 parts by weight to 25 parts by weight based on 100 parts by weight of the monomer mixture. When the amount of the unsaturated carboxylic acid-based monomer satisfies the above range, the negative electrode active material and a conductive agent may be effectively dispersed, and adhesion between the negative electrode current collector and the negative electrode active material may be sufficiently secured.

The monomer having a solubility in water of 100 g/L or less means a monomer in which an amount dissolved when added to 1L of water at 25°C is 100 g or less. In a case in which the monomer having low water solubility is included in the acryl-based polymer, an effect of reducing a moisture content in the negative electrode may be obtained.

As the monomer having a solubility in water of 100 g/L or less, for example, at least one monomer selected from the group consisting of alkyl (meth)acrylate having 1 to 10 carbon atoms, (meth)acrylonitrile, and styrene may be used, but the present invention is not limited thereto.

Specific examples of the alkyl (meth)acrylate having 1 to 10 carbon atoms may be methyl acrylate, ethyl acrylate, propyl acrylate, isopropyl acrylate, n-butyl acrylate, isobutyl acrylate, n-amyl acrylate, isoamyl acrylate, n-ethylhexyl acrylate, 2-ethylhexyl acrylate, 2-hydroxyethyl acrylate, methyl methacrylate, ethyl methacrylate, propyl methacrylate, isopropyl methacrylate, n-butyl methacrylate, isobutyl methacrylate, n-amyl methacrylate, isoamyl methacrylate, n-hexyl methacrylate, n-ethylhexyl methacrylate, and 2-ethylhexyl methacrylate, but the present invention is not limited thereto. Specific examples of the (meth)acrylonitrile may be acrylonitrile and methacrylonitrile.

The monomer having a solubility in water of 100 g/L or less may be included in an amount of 2 parts by weight to 10 parts by weight, specifically, 4 parts by weight to 8 parts by weight based on 100 parts by weight of the monomer mixture. When the amount of the monomer having a solubility in water of 100 g/L or less satisfies the above range, an acryl-based polymer that is easily soluble in water may be obtained while reducing the moisture content in the negative electrode.

A glass transition temperature ($T_g$) of the acryl-based polymer may be in a range of 100°C to 150°C, particularly 110°C to 140°C, and more particularly 120°C to 130°C. When the above range is satisfied, processability during preparation of the negative electrode may be improved, and the negative electrode adhesion may be improved.

The acryl-based polymer may be included in an amount of 1 wt% to 30 wt%, particularly 3 wt% to 20 wt%, and more particularly 5 wt% to 15 wt%, for example, 1 wt% to 9.5 wt% in the negative electrode active material layer. In a case in which the above range is satisfied, since the exfoliation of the negative electrode active material may be effectively suppressed, lifetime of the battery may be further improved.

The acryl-based polymer may be prepared by mixing the above monomer components to form a monomer mixture, and then polymerizing the monomer mixture. In this case, the polymerization may be performed by using a conventional polymerization method known in the art, for example, a method such as solution polymerization and emulsion polymerization, and polymerization temperature and polymerization time may be appropriately determined according to the polymerization method or a type of polymerization initiator. For example, the polymerization temperature may be in a range of 50°C to 100°C, and the polymerization time may be in a range of 1 hour to 10 hours. Also, a polymerization initiator or a chain transfer agent may be additionally added during the polymerization, if necessary. As the polymerization initiator, inorganic or organic peroxide may be used, and, for example, a water-soluble initiator including potassium persulfate, sodium persulfate, or ammonium persulfate may be used. As the chain transfer agent, for example, mercaptans, terpines, such as terpinolene, dipentene, and t-terpiene, chloroform, or halogenated hydrocarbon, such as carbon tetrachloride, may be used.

### (2) Cellulose Nanofibers

As the cellulose nanofibers are used in combination with the acryl-based binder, the cellulose nanofibers act to improve toughness of the binder. Accordingly, the exfoliation of the negative electrode active material from the negative electrode active material layer may be suppressed even with the excessive volume change of the negative electrode active material (particularly, silicon particles) during charge and discharge of the battery, and the conductive path of the negative electrode active material layer may be maintained. Accordingly, the life characteristics of the battery using the negative electrode may be improved.

Particularly, the cellulose nanofiber has a great effect when used in combination with the acryl-based polymer. In a case in which only the acryl-based polymer is used as the binder of the negative electrode active material layer, since the acryl-based polymer is a linear polymer or a partially branched polymer, it is difficult to suppress structural collapse of the negative electrode during the excessive volume change of the negative electrode active material and the negative electrode adhesion is low.

In contrast, in a case in which the negative electrode active material layer includes the acryl-based polymer and the cellulose nanofibers, as the binder, the acryl-based polymer may be evenly dispersed in the negative electrode active material layer, and the cellulose nanofibers may act as a filler in the negative electrode active material layer. Accordingly, the durability of the negative electrode may be improved.

Also, since a carboxy group on a surface of the cellulose nanofiber is bonded to a hydroxyl group of the acryl-based polymer, tensile strength of the binder may be high. Accordingly, a structure of the negative electrode may be maintained even with the rapid volume change of the negative electrode active material, particularly, silicon particles, the exfoliation of the negative electrode active material may be suppressed, and the conductive path may be effectively maintained in the negative electrode active material layer. Thus, the life characteristics of the battery may be improved.

Furthermore, since the cellulose nanofiber is longer than conventionally used carboxymethyl cellulose to be able to be easily adsorbed to the negative electrode active material and may be surface-adhered to surrounding components, unlike a styrene butadiene rubber, the adhesion of the negative electrode may be further improved.

A material of the cellulose nanofiber may be formed of a polysaccharide having a β-1,4-glucan structure. Examples of the cellulose nanofibers may be natural cellulose fibers (pulp fibers, etc.), such as cellulose nanofibers derived from higher plants (e.g., wood fibers (pulp of wood such as conifers and broadleaf trees), bamboo fibers, sugar cane fibers, seed hair fibers (e.g., cotton linters, bombax cotton, kapok, etc.), bast fibers (e.g., hemp, paper mulberry, mitsumata, etc.), and leaf fibers (e.g., Manila hemp, New Zealand hemp, etc.), animal-derived cellulose fibers (e.g., hoya cellulose, etc.), bacteria-derived cellulose fibers (e.g., cellulose contained in nata de coco, etc.), chemically synthesized cellulose fibers (e.g., rayon, cellulose esters (cellulose acetate, etc.), and hydroxyalkyl cellulose (e.g., hydroxyethyl cellulose (HEC), hydroxypropyl cellulose, etc.); or cellulose ether derivatives such as alkyl cellulose (methyl cellulose, ethyl cellulose, etc.). These cellulose nanofibers may be used alone or in combination of two or more thereof.

Among the cellulose nanofibers, in terms of being easy to prepare cellulose nanofibers having an appropriate aspect ratio, cellulose fibers derived from higher plants, for example, wood fibers (pulp of wood such as conifers and broadleaf trees) or pulp-derived cellulose fibers, such as seed hair fibers (cotton linters pulp, etc.), are preferred.

An average diameter of the cellulose nanofibers may be in a range of 2 nm to 50 nm, particularly 2.5 nm to 25 nm, and more particularly 3 nm to 5 nm. When the above range is satisfied, since the cellulose nanofibers may be evenly

dispersed in the negative electrode active material layer, conductivity of the negative electrode, the negative electrode adhesion, and the battery life characteristics may be further improved. The average diameter means an average value of diameters of top 10 cellulose nanofibers with a larger diameter and bottom 10 cellulose nanofibers when the negative electrode active material layer of the prepared negative electrode is checked with a transmission electron microscope (TEM) at tens of thousands of magnification (e.g., 10,000 magnification).

An average length of the cellulose nanofibers is in a range of 1 μm to 5 μm. When the above range is satisfied, since the cellulose nanofibers may be evenly dispersed in the negative electrode active material layer, the conductivity of the negative electrode, the negative electrode adhesion, and the battery life characteristics may be further improved. The average length means an average value of lengths of top 10 cellulose nanofibers with a larger length and bottom 10 cellulose nanofibers when the negative electrode active material layer of the prepared negative electrode is checked with a TEM at tens of thousands of magnification (e.g., 10,000 magnification).

An average aspect ratio of the cellulose nanofibers is in a range of 30 to 2,000, particularly 50 to 1,000, and more particularly 300 to 500. When the above range is satisfied, since the cellulose nanofibers may be evenly dispersed in the negative electrode active material layer, the conductivity of the negative electrode, the negative electrode adhesion, and the battery life characteristics may be further improved. Herein, the aspect ratio means the ratio of the length with respect to the diameter of the cellulose nanofiber. The average aspect ratio means an average value of aspect ratios of top 10 cellulose nanofibers with a larger aspect ratio and bottom 10 cellulose nanofibers when the negative electrode active material layer of the prepared negative electrode is checked with a TEM at tens of thousands of magnification (e.g., 10,000 magnification).

The cellulose nanofiber may be included in an amount of 0.1 wt% to 3 wt%, particularly 0.2 wt% to 1.5 wt%, and more particularly 0.4 wt% to 1.0 wt%, for example, 0.5 wt% to 1.0 wt% in the negative electrode active material layer. When the above range is satisfied, the tensile strength of the binder may be effectively improved to further improve the life characteristics of the battery.

In the negative electrode active material layer, a weight ratio of the acryl-based polymer to the cellulose nanofibers may be in a range of 6:4 to 9.8:0.2, particularly 7:3 to 9.8:0.2, and more particularly 8:2 to 9.5:0.5, for example, 8:2 to 9:1. When the above range is satisfied, since the tensile strength (toughness) of the overall binder may be sufficient, the suppression of the exfoliation of the negative electrode active material and securing of the conductive path may be improved, and thus, the lifetime of the battery may be improved. Also, since viscosity of a negative electrode slurry may be maintained at an appropriate level, phase stability of the negative electrode slurry may be improved.

The negative electrode active material layer may further include a conductive agent. The conductive agent is not particularly limited as long as it has conductivity without causing adverse chemical changes in the battery, wherein, for example, a conductive material, such as: graphite such as natural graphite or artificial graphite; carbon black such as acetylene black, Ketjen black, channel black, furnace black, lamp black, and thermal black; conductive fibers such as carbon fibers and metal fibers; conductive tubes such as single-walled carbon nanotubes, double-walled carbon nanotubes, and multi-walled carbon nanotubes; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

The conductive agent may be included in an amount of 5 wt% to 10 wt%, specifically, 5 wt% to 15 wt% in the negative electrode active material layer.

## <Secondary Battery>

A secondary battery according to another embodiment of the present invention may include the negative electrode of the above-described embodiment. Specifically, the secondary battery may include the negative electrode of the above-described embodiment, a positive electrode, a separator disposed between the positive electrode and the negative electrode, and an electrolyte, wherein the negative electrode is the same as the above-described negative electrode. Since the negative electrode has been described above, detailed descriptions thereof will be omitted.

The positive electrode may include a positive electrode current collector and a positive electrode active material layer which is formed on the positive electrode current collector and includes a positive electrode active material.

In the positive electrode, the positive electrode current collector is not particularly limited as long as it has conductivity without causing adverse chemical changes in the batteries, and, for example, stainless steel, aluminum, nickel, titanium, fired carbon, or aluminum or stainless steel that is surface-treated with one of carbon, nickel, titanium, or silver may be used. Also, the positive electrode current collector may typically have a thickness of 3 μm to 500 μm and may have a surface with fine roughness to improve adhesion to the positive electrode active material. The positive electrode current collector may be used in various shapes, for example, a film, a sheet, a foil, a net, a porous body, a foam body, a non-woven fabric body, and the like.

The positive electrode active material may be a typically used positive electrode active material. Specifically, the positive electrode active material may include a layered compound, such as lithium cobalt oxide ($LiCoO_2$) and lithium

nickel oxide ($LiNiO_2$), or a compound substituted with one or more transition metals; lithium iron oxides such as $LiFe_3O_4$; and $Li_{1+a}M_bO_{2+c}$.

More specifically, the positive electrode active material may include $Li_{1+a}M_bO_{2+c}$, wherein M may be at least one element selected from the group consisting of nickel (Ni), cobalt (Co), manganese (Mn), iron (Fe), phosphorus (P), aluminum (Al), magnesium (Mg), calcium (Ca), zirconium (Zr), zinc (Zn), titanium (Ti), ruthenium (Ru), niobium (Nb), tungsten (W), boron (B), silicon (Si), sodium (Na), potassium (K), molybdenum (Mo), and vanadium (V), and $-0.2 \leq a \leq 0.2$, $0 < b \leq 2$, and $0 \leq c \leq 2$. a may preferably satisfy $-0.1 \leq a \leq 0.1$, more preferably, $0 \leq a \leq 0.1$. Specifically, the $Li_{1+a}M_bO_{2+c}$ may include $Li_{1+a}[Ni_pCo_qM^1_rM^2_s]O_2$ or may be $Li_{1+a}[Ni_pCo_qM^1_rM^2_s]O_2$. In the $Li_{1+a}[Ni_pCo_qM^1_rM^2_s]O_2$, $M^1$ may be at least one element of Al and Mn, $M^2$ may be at least one element selected from the group consisting of Fe, P, Mg, Ca, Zr, Zn, Ti, Ru, Nb, W, B, Si, Na, K, Mo, and V, p may satisfy $0<p<1$, preferably $0.3<p<1$, and more preferably $0.5<p<1$, q may satisfy $0<q<1$, preferably $0<q<0.7$, and more preferably $0<q<0.5$, r may satisfy $0<r<1$, preferably $0<r<0.7$, and more preferably $0<r<0.5$, and s may satisfy $0 \leq s \leq 0.2$, preferably, $0 \leq s \leq 0.1$. The $Li_{1+a}M_bO_{2+c}$ may include at least one selected from the group consisting of $LiCoO_2$, $LiNiO_2$, $LiMnO_2$, $Li[Ni_{0.5}Co_{0.3}Mn_{0.2}]O_2$, $Li[Ni_{0.6}Co_{0.2}Mn_{0.2}]O_2$, $Li[Ni_{0.7}Co_{0.1}Mn_{0.2}]O_2$, $Li[Ni_{0.8}Co_{0.1}Mn_{0.1}]O_2$, $Li[Ni_{0.9}CO_{0.05}Mn_{0.05}]O_2$, $LiMn_2O_4$, $LiFePO_4$, and $0.5Li_2MnO_3 \cdot 0.5Li[Mn_{0.4}Ni_{0.3}Co_{0.3}]O_2$. Preferably, the $Li_{1+a}M_bO_{2+c}$ may include any one of $Li[Ni_{0.6}Co_{0.2}Mn_{0.2}]O_2$, $Li[Ni_{0.7}Co_{0.1}Mn_{0.2}]O_2$, $Li[Ni_{0.8}Co_{0.1}Mn_{0.1}]O_2$, and $Li[Ni_{0.9}Co_{0.05}Mn_{0.05}]O_2$. The positive electrode active material may be included in an amount of 95 wt% to 99 wt% in the positive electrode active material layer. When the positive electrode and the negative electrode of the above-described embodiment are used in combination, occurrence of overpotential in the positive electrode may be prevented.

The positive electrode active material layer may include a positive electrode conductive agent and a positive electrode binder as well as the above-described positive electrode active material.

In this case, the positive electrode conductive agent is used for providing conductivity to the electrode, wherein any conductive agent may be used without particular limitation as long as it has electronic conductivity without causing adverse chemical changes in the battery. Specific examples of the positive electrode conductive agent may be graphite such as natural graphite and artificial graphite; a carbon-based material such as carbon black, acetylene black, Ketjen black, channel black, furnace black, lamp black, thermal black, and carbon fibers; powders or fibers of metals such as copper, nickel, aluminum, and silver; conductive whiskers such as zinc oxide whiskers and potassium titanate whiskers; conductive metal oxide such as titanium oxide; or conductive polymers such as polyphenylene derivatives, and one alone or a mixture of two or more thereof may be used.

Also, the positive electrode binder functions to improve binding between positive electrode active material particles and adhesion between the positive electrode active material and the positive electrode current collector. Specific examples of the positive electrode binder may be polyvinylidene fluoride (PVDF), a polyvinylidene fluoride-hexafluoropropylene copolymer (PVDF-co-HEP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluoro rubber, or various copolymers thereof, and one alone or a mixture of two or more thereof may be used.

The separator separates the negative electrode and the positive electrode and provides a movement path of lithium ions, wherein any separator may be used as the separator without particular limitation as long as it is typically used in a secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer component may be used to secure heat resistance or mechanical strength, and the separator having a single layer or multilayer structure may be optionally used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include a non-aqueous organic solvent and a metal salt.

Examples of the non-aqueous organic solvent may be aprotic organic solvents, such as N-methyl-2-pyrrolidone, propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, ethylene carbonate and propylene carbonate, ring-type carbonates among the carbonate-based organic solvents, well dissociate a lithium salt in the electrolyte solution due to high dielectric constants as high-viscosity organic solvents, and thus, the ring-type carbonate may be preferably used. Since an electrolyte solution having high

electrical conductivity may be prepared when the ring-type carbonate is mixed with low-viscosity, low-dielectric constant linear carbonate, such as dimethyl carbonate and diethyl carbonate, in an appropriate ratio, the ring-type carbonate may be more preferably used.

A lithium salt may be used as the metal salt, and the lithium salt is a material that is readily soluble in the non-aqueous electrolyte solution, wherein, for example, at least one selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$ may be used as an anion of the lithium salt.

At least one additive, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above-described electrolyte components for the purpose of improving the life characteristics of the battery, suppressing a decrease in battery capacity, and improving discharge capacity of the battery.

According to another embodiment of the present invention, a battery module including the secondary battery as a unit cell and a battery pack including the battery module are provided. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, preferred examples will be provided for better understanding of the present invention.

## Examples and Comparative Examples

Acryl-based polymers and cellulose nanofibers were prepared as follows.

### (A) Acryl-based Polymers

(A-1) An acryl-based polymer ($T_g$: 120°C, elastic modulus: 7.99 GPa) prepared by using 60 parts by weight of acrylamide, 30 parts by weight of acrylic acid, and 10 parts by weight of acrylonitrile

(A-2) An acryl-based polymer ($T_g$: 110°C, elastic modulus: 3.12 GPa) prepared by using 80 parts by weight of acrylamide, 15 parts by weight of acrylic acid, and 5 parts by weight of acrylonitrile.

### (B) Cellulose Nanofibers

(B-1) Cellulose nanofibers in the form of single fibers

(B-2) Cellulose nanofibers in the form of molecular fibers

### Example 1: Preparation of Negative Electrode

A negative electrode slurry including silicon particles having an average particle diameter ($D_{50}$) of 5 μm; a conductive agent including carbon black and single-walled carbon nanotubes; the acryl-based polymer of (A-1); the cellulose nanofibers of (B-1); and water was prepared.

The negative electrode slurry was coated on both surfaces of a 20 μm thick copper (Cu) metal thin film, as a negative electrode current collector, at a loading of 150 mg/25 $cm^2$, and dried. In this case, a temperature of circulating air was 70°C. Subsequently, the negative electrode current collector, on which the slurry was coated and dried, was roll-pressed and dried in a vacuum oven at 130°C for 8 hours to prepare a negative electrode including a negative electrode active material layer.

A weight ratio of the silicon particles, the conductive agent, the acryl-based polymer of (A-1), and the cellulose nanofibers of (B-1) was 80:10:9.8:0.2.

### Examples 2 to 5, Reference Example 6 and Comparative Example 1: Preparation of Negative Electrodes

Negative electrodes were prepared in the same manner as in Example 1 except that conditions were modified as shown in Table 1 below.

[Table 1]

| | Acryl-based polymer | | Cellulose nanofibers | |
|---|---|---|---|---|
| | Type | Amount (wt%) | Type | Amount (wt%) |
| Example 1 | (A-1) | 9.8 | (B-1) | 0.2 |
| Example 2 | (A-1) | 9.5 | (B-1) | 0.5 |
| Example 3 | (A-1) | 9.2 | (B-1) | 0.8 |
| Example 4 | (A-1) | 9.0 | (B-1) | 1.0 |
| Example 5 | (A-2) | 9.0 | (B-1) | 1.0 |
| Reference Example 6 | (A-2) | 9.0 | (B-2) | 1.0 |
| Comparative Example 1 | (A-1) | 10.0 | (B-1) | 0 |

Comparative Example 2: Preparation of Negative Electrode

A negative electrode was prepared in the same manner as in Example 1 except that styrene butadiene rubber and carboxymethyl cellulose were used instead of using the acryl-based polymer of (A-1) and the cellulose nanofibers of (B-1).

A weight ratio of the silicon particles, the conductive agent, the styrene butadiene rubber, and the carboxymethyl cellulose was 80:10:3:7.

[Table 2]

| | Cellulose nanofibers | | |
|---|---|---|---|
| | Average diameter (nm) | Average length ($\mu$m) | Aspect ratio |
| Negative electrodes of Examples 1 to 5 | 3.5 | 3 | 400 |
| Negative electrode of Reference Example 6 | 20 | 10 | 85 |

The average diameter means an average value of diameters of top 10 cellulose nanofibers with a larger diameter and bottom 10 cellulose nanofibers when the negative electrode active material layer of the prepared negative electrode was checked with a TEM at a magnification of 10,000. The average length means an average value of lengths of top 10 cellulose nanofibers with a larger length and bottom 10 cellulose nanofibers when the negative electrode active material layer of the prepared negative electrode was checked with a TEM at a magnification of 10,000.

The average aspect ratio means an average value of aspect ratios of top 10 cellulose nanofibers with a larger aspect ratio and bottom 10 cellulose nanofibers when the negative electrode active material layer of the prepared negative electrode was checked with a TEM at a magnification of 10,000.

**Experimental Example 1: Life Characteristics (Capacity Retention) Evaluation**

Secondary batteries were prepared by using each of the negative electrodes of Examples 1 to 6 and Comparative Examples 1 and 2.

$Li[Ni_{0.9}Mn_{0.05}Co_{0.05}]O_2$ was used as a positive electrode active material. The positive electrode active material, multi-walled carbon nanotubes (MWCNT) as a conductive agent, and polyvinylidene fluoride (PVdF), as a binder, were mixed in a weight ratio of 96:2:2 in an N-methyl-2-pyrrolidone solvent to prepare a positive electrode slurry.

The prepared positive electrode slurry was coated on a 15 $\mu$m thick aluminum metal thin film, as a positive electrode current collector and dried. In this case, a temperature of circulating air was 110°C. Subsequently, the coated positive electrode current collector was roll-pressed and dried in a vacuum oven at 130°C for 2 hours to form a positive electrode active material layer.

The negative electrode, the positive electrode, and a porous polyethylene separator were assembled by using a winding method, and an electrolyte solution (ethylene carbonate (EC)/ethyl methyl carbonate (EMC)=1/2 (volume ratio), lithium hexafluorophosphate ($LiPF_6$ 1 mol) was injected into the assembled battery to prepare a lithium secondary battery.

The secondary batteries were charged and discharged to evaluate life characteristics (capacity retention). Each secondary battery was charged and discharged in a first cycle and a second cycle at 0.1 C, and was charged and discharged from a third cycle to a $200^{th}$ cycle at 0.5 C.

Charging conditions: CC(constant current)/CV (constant voltage) (5 mV/0.005 C current cut-off)
Discharging conditions: CC(constant current) condition 1.5 V

Each capacity retention was derived by the following calculation.

Capacity retention(%)=(200$^{th}$ discharge capacity/1$^{st}$ discharge capacity)×100

[Table 3]

| | Capacity retention (%) |
|---|---|
| Example 1 | 59.1 |
| Example 2 | 66.4 |
| Example 3 | 76.0 |
| Example 4 | 77.5 |
| Example 5 | 82.3 |
| Reference Example 6 | 71.3 |
| Comparative Example 1 | 58.3 |
| Comparative Example 2 | 50.5 |

Referring to Table 1 and FIG. 1, it may be understood that capacity retentions of the secondary batteries using the negative electrodes of Examples 1 to 5 and Reference Example 6, in which the acryl-based polymer and the cellulose nanofibers were used in combination, were greater than capacity retention of the secondary battery using the negative electrode of Comparative Example 1 in which only the acryl-based polymer was used, and were greater than capacity retention of the secondary battery using the negative electrode of Comparative Example 2 in which the styrene butadiene rubber and the carboxymethyl cellulose were used. Also, when Example 4 and Example 5 were compared, it may be understood that Example 5 using the acryl-based polymer, in which 80 parts by weight of acrylamide was used based on 100 parts by weight of the monomer mixture, had higher capacity retention than Example 4 using the acryl-based polymer in which 60 parts by weight of acrylamide was used based on 100 parts by weight of the monomer mixture.
Furthermore, with respect to Example 5 in which the cellulose nanofibers having an aspect ratio of 400 were present in the negative electrode active material layer, it may be understood that Example 5 had higher capacity retention than Reference Example 6 having an aspect ratio of 85.

## Claims

**1.** A negative electrode comprising a negative electrode active material layer,

wherein the negative electrode active material layer comprises a negative electrode active material and a binder, wherein the binder comprises:

a) an acryl-based polymer which is a polymer of a monomer mixture containing a (meth)acrylamide group-containing monomer, an unsaturated carboxylic acid-based monomer, and a monomer having a solubility in water of 100 g/L or less, the solubility being determined as described in the description; and
b) cellulose nanofibers,

wherein the cellulose nanofibers have an average length of 1 μm to 5 μm, wherein the average length is determined as described in the description, and
wherein the cellulose nanofibers have an average aspect ratio of 30 to 2,000, wherein the average aspect ratio is determined as described in the description.

**2.** The negative electrode of claim 1, wherein the (meth)acrylamide group-containing monomer is included in an amount of 60 parts by weight to 90 parts by weight based on 100 parts by weight of the polymer of the monomer mixture.

3. The negative electrode of claim 1, wherein the (meth)acrylamide group-containing monomer is acrylamide, and wherein the unsaturated carboxylic acid-based monomer is acrylic acid.

4. The negative electrode of claim 1, wherein the unsaturated carboxylic acid-based monomer is included in an amount of 8 parts by weight to 30 parts by weight based on 100 parts by weight of the polymer of the monomer mixture.

5. The negative electrode of claim 1, wherein the monomer having a solubility in water of 100 g/L or less is included in an amount of 2 parts by weight to 10 parts by weight based on 100 parts by weight of the polymer of the monomer mixture.

6. The negative electrode of claim 1, wherein the monomer having a solubility in water of 100 g/L or less is acrylonitrile.

7. The negative electrode of claim 1, wherein the acryl-based polymer has a glass transition temperature ($T_g$) of 100°C to 150°C.

8. The negative electrode of claim 1, wherein the acryl-based polymer is included in an amount of 1 wt% to 30 wt% in the negative electrode active material layer.

9. The negative electrode of claim 1, wherein the cellulose nanofibers have an average diameter of 2 nm to 50 nm, wherein the average diameter is determined as described in the description.

10. The negative electrode of claim 1, wherein in the negative electrode active material layer, a weight ratio of the acryl-based polymer to the cellulose nanofibers is in a range of 6:4 to 9.8:0.2.

11. The negative electrode of claim 1, wherein in the negative electrode active material layer, a weight ratio of the acryl-based polymer to the cellulose nanofibers is in a range of 8:2 to 9: 1.

12. The negative electrode of claim 1, wherein the cellulose nanofibers are included in an amount of 0.1 wt% to 3 wt% in the negative electrode active material layer.

13. The negative electrode of claim 1, wherein the negative electrode active material comprises silicon particles.

14. A secondary battery comprising the negative electrode of claim 1.

## Patentansprüche

1. Negative Elektrode, umfassend eine Negativelektrodenaktivmaterialschicht,

wobei die Negativelektrodenaktivmaterialschicht ein Negativelektrodenaktivmaterial und ein Bindemittel umfasst,
wobei das Bindemittel folgendes umfasst:

a) ein Polymer auf Acrylbasis, das ein Polymer aus einer Monomermischung ist, welche ein (Meth) acrylamidgruppen-haltiges Monomer, ein Monomer auf Basis einer ungesättigten Carbonsäure und ein Monomer mit einer Wasserlöslichkeit von 100 g/l oder weniger enthält, wobei die Löslichkeit wie in der Beschreibung angegeben bestimmt wird; und
b) Cellulose-Nanofasern,

wobei die Cellulose-Nanofasern eine durchschnittliche Länge von 1 μm bis 5 μm aufweisen, wobei die durchschnittliche Länge wie in der Beschreibung angegeben bestimmt wird, und
wobei die Cellulose-Nanofasern ein durchschnittliches Seitenverhältnis von 30 bis 2.000 aufweisen, wobei das durchschnittliche Seitenverhältnis wie in der Beschreibung angegeben bestimmt wird.

2. Negative Elektrode nach Anspruch 1, wobei das (Meth)acrylamidgruppen-haltige Monomer in einer Menge von 60 Gewichtsteilen bis 90 Gewichtsteilen, bezogen auf 100 Gewichtsteile des Polymers der Monomermischung, enthalten ist.

3. Negative Elektrode nach Anspruch 1, wobei das (Meth)acrylamidgruppe-haltige Monomer Acrylamid ist, und

wobei das Monomer auf Basis einer ungesättigten Carbonsäure Acrylsäure ist.

4. Negative Elektrode nach Anspruch 1, wobei das Monomer auf Basis einer ungesättigten Carbonsäure in einer Menge von 8 Gewichtsteilen bis 30 Gewichtsteilen, bezogen auf 100 Gewichtsteile des Polymers der Monomermischung, enthalten ist.

5. Negative Elektrode nach Anspruch 1, wobei das Monomer mit einer Wasserlöslichkeit von 100 g/l oder weniger in einer Menge von 2 Gewichtsteilen bis 10 Gewichtsteilen, bezogen auf 100 Gewichtsteile des Polymers der Monomermischung, enthalten ist.

6. Negative Elektrode nach Anspruch 1, wobei das Monomer mit einer Wasserlöslichkeit von 100 g/l oder weniger Acrylnitril ist.

7. Negative Elektrode nach Anspruch 1, wobei das Polymer auf Acrylbasis eine Glasübergangstemperatur (Tg) von 100 °C bis 150 °C aufweist.

8. Negative Elektrode nach Anspruch 1, wobei das Polymer auf Acrylbasis in einer Menge von 1 Gew.-% bis 30 Gew.-% in der Negativelektrodenaktivmaterialschicht enthalten ist.

9. Negative Elektrode nach Anspruch 1, wobei die Cellulose-Nanofasern einen mittleren Durchmesser von 2 nm bis 50 nm aufweisen, wobei der mittlere Durchmesser wie in der Beschreibung angegeben bestimmt wird.

10. Negative Elektrode nach Anspruch 1, wobei in der Negativelektrodenaktivmaterialschicht ein Gewichtsverhältnis des Polymers auf Acrylbasis zu den Cellulose-Nanofasern in einem Bereich von 6:4 bis 9,8:0,2 liegt.

11. Negative Elektrode nach Anspruch 1, wobei in der Negativelektrodenaktivmaterialschicht ein Gewichtsverhältnis des Polymers auf Acrylbasis zu den Cellulose-Nanofasern im Bereich von 8:2 bis 9:1 liegt.

12. Negative Elektrode nach Anspruch 1, wobei die Cellulose-Nanofasern in einer Menge von 0,1 Gew.-% bis 3 Gew.-% in der Negativelektrodenaktivmaterialschicht enthalten sind.

13. Negative Elektrode nach Anspruch 1, wobei das Negativelektrodenaktivmaterial Siliziumpartikel umfasst.

14. Sekundärbatterie, die die negative Elektrode nach Anspruch 1 umfasst.

**Revendications**

1. Électrode négative comprenant une couche de matériau actif d'électrode négative,

   dans laquelle la couche de matériau actif d'électrode négative comprend un matériau actif d'électrode négative et un liant,
   dans laquelle le liant comprend :

      a) un polymère acrylique qui est un polymère d'un mélange de monomères contenant un monomère contenant un groupe (méth)acrylamide, un monomère à base d'acide carboxylique insaturé, et un monomère présentant une solubilité dans l'eau de 100 g/L ou moins, la solubilité étant déterminée comme décrit dans la description ; et
      b) des nanofibres de cellulose,

   dans laquelle les nanofibres de cellulose présentent une longueur moyenne de 1 μm à 5 μm, dans laquelle la longueur moyenne est déterminée comme décrit dans la description, et
   dans laquelle les nanofibres de cellulose présentent un rapport d'aspect moyen de 30 à 2000, dans laquelle le rapport d'aspect moyen est déterminé comme décrit dans la description.

2. Électrode négative selon la revendication 1, dans laquelle le monomère contenant un groupe (méth)acrylamide est inclus en une quantité de 60 parties en poids à 90 parties en poids sur la base de 100 parties en poids du polymère du mélange de monomères.

**3.** Électrode négative selon la revendication 1, dans laquelle le monomère contenant un groupe (méth)acrylamide est l'acrylamide, et dans laquelle le monomère à base d'acide carboxylique insaturé est l'acide acrylique.

**4.** Électrode négative selon la revendication 1, dans laquelle le monomère à base d'acide carboxylique insaturé est inclus en une quantité de 8 parties en poids à 30 parties en poids sur la base de 100 parties en poids du polymère du mélange de monomères.

**5.** Électrode négative selon la revendication 1, dans laquelle le monomère présentant une solubilité dans l'eau de 100 g/L ou moins est inclus en une quantité de 2 parties en poids à 10 parties en poids sur la base de 100 parties en poids du polymère du mélange de monomères.

**6.** Électrode négative selon la revendication 1, dans laquelle le monomère présentant une solubilité dans l'eau de 100 g/L ou moins est l'acrylonitrile.

**7.** Électrode négative selon la revendication 1, dans laquelle le polymère acrylique présente une température de transition vitreuse ($T_g$) de 100 °C à 150 °C.

**8.** Électrode négative selon la revendication 1, dans laquelle le polymère acrylique est inclus en une quantité de 1 % en poids à 30 % en poids dans la couche de matériau actif d'électrode négative.

**9.** Électrode négative selon la revendication 1, dans laquelle les nanofibres de cellulose présentent un diamètre moyen de 2 nm à 50 nm, dans laquelle le diamètre moyen est déterminé comme décrit dans la description.

**10.** Électrode négative selon la revendication 1, dans laquelle, dans la couche de matériau actif d'électrode négative, un rapport pondéral du polymère acrylique aux nanofibres de cellulose est dans une plage de 6:4 à 9,8:0,2.

**11.** Électrode négative selon la revendication 1, dans laquelle, dans la couche de matériau actif d'électrode négative, un rapport pondéral du polymère acrylique aux nanofibres de cellulose est dans une plage de 8:2 à 9:1.

**12.** Électrode négative selon la revendication 1, dans laquelle les nanofibres de cellulose sont incluses en une quantité de 0,1 % en poids à 3 % en poids dans la couche de matériau actif d'électrode négative.

**13.** Électrode négative selon la revendication 1, dans laquelle le matériau actif d'électrode négative comprend des particules de silicium.

**14.** Batterie secondaire comprenant l'électrode négative selon la revendication 1.

[FIG. 1]

Capacity retention (%)
100
90
80
70
60
50
40
30
20
10
0
0
50
100
150
200
Cycle number
COMPARATIVE EXAMPLE 1
COMPARATIVE EXAMPLE 2
EXAMPLE 1
EXAMPLE 2
EXAMPLE 3
EXAMPLE 4
EXAMPLE 5
EXAMPLE 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210187721
- US 2016260973 A1
- KR 20210097648 A
- KR 20180010789 A